# DEMANDE DE BREVET EUROPEEN

(11) **EP 1 443 727 A1**
(43) Date de publication de la demande: **04.08.2004**
(21) Numéro de dépôt: 03293231.1
(22) Date de dépôt: 19.12.2003
(51) Int. Cl.: H04L 29/06

(54) **Dispositif de traitement de données pour l'établissement de communications par sélection de terminaux d'utilisateurs en fonction de leur accessibilité**

(30) Priorité: 24.12.2002 FR 0216618
(71) Demandeur: ALCATEL, 75008 Paris (FR)
(72) Inventeur: Gass, Raymond, 67150 Bolsenheim (FR); Le Creff, Michel, 95450 Vigny (FR)
(74) Mandataire: Sciaux, Edmond

(57) **Abrégé**

Un dispositif de traitement de données est dédié à au moins un utilisateur appelant et comprend i) des moyens de mémorisation (Mi) capables de stocker des données d'informations représentatives d'une ou plusieurs adresses de communication de terminaux de communication (Ci,Ti,FTi) utilisés par l'utilisateur appelant (Ui) et d'un état d'accessibilité de cet utilisateur appelant par chacun desdits terminaux, ii) des moyens d'interface (li) permettant à l'utilisateur appelant (Ui) de requérir l'établissement d'une communication avec au moins un utilisateur appelé (Uj), et iii) des moyens de gestion (Gi) capables de négocier avec un autre dispositif de traitement de données (Dj), dédié à l'utilisateur appelé (Uj), en fonction au moins des données d'informations qui sont stockées dans leurs moyens de mémorisation respectifs (Mi,Mj), l'établissement de la communication, requise par l'utilisateur appelant (Ui), entre deux terminaux susceptibles d'être respectivement accédés par les utilisateurs appelant (Ui) et appelé (Uj).

## Description

L'invention concerne l'échange de données entre terminaux de communication au sein de réseaux de communications, et plus particulièrement l'établissement de communications entre des terminaux d'utilisateurs.

En matière de téléphonie, le souhait ultime des appelants est de pouvoir joindre des appelés le plus rapidement possible, indépendamment de leurs positions respectives et de leurs terminaux de communications respectifs. Or, en raison, d'une part, de la coexistence de terminaux de types différents, offrant des services de types différents (comme par exemple la téléphonie fixe ou mobile, la téléphonie par Internet, la transmission de données de texte, de voix, d'images fixes ou animées, ou de données multimédia) et généralement raccordés à des réseaux de types différents, et d'autre part, de la mobilité accrue des personnes, l'établissement d'une communication entre un appelant et un appelé peut s'avérer complexe et fastidieuse.

En cas de tentative infructueuse, l'appelant peut être contraint de manipuler des répertoires et/ou d'établir une ou plusieurs communications pour déterminer l'adresse de communication du terminal grâce auquel il est susceptible de joindre l'appelé. Cela peut également contraindre l'appelant à utiliser un autre type de terminal que celui initialement utilisé. En outre, une fois la liaison établie entre un terminal d'appelant et un terminal d'appelé, il n'est pas garanti que l'appelant puisse transmettre ses données à l'appelé, notamment lorsque leurs terminaux respectifs offrent des services de types différents.

Pour tenter d'améliorer la situation, il a été proposé d'améliorer les dispositifs de contrôle d'appels (ou « call control ») en leur permettant de transférer un appel vers une autre adresse de communication ou vers un service de messagerie, ou bien de rappeler automatiquement l'appelant lorsque l'appelé est en ligne. Cependant, ces dispositifs ne prennent pas réellement en considération l'appelant et ne sont pas adaptés à la gestion de la mobilité et/ou de la diversité des types de terminaux de communication.

Le document **EP 0 872 998** décrit un dispositif de traitement de données dédié aux utilisateurs d'un réseau de télécommunications privé, pour l'établissement de communications entre un terminal d'un utilisateur appelant et un terminal de communication d'un utilisateur appelé, chacun desdits terminaux étant raccordé à ce même réseau de communications privé. Ce dispositif comprend :
- des moyens de mémorisation propres à stocker des données d'informations représentatives d'une adresse de communication d'un terminal de l'utilisateur appelant, et d'un état d'accessibilité de cet utilisateur appelant via ledit terminal,
- des moyens d'interface agencés pour permettre à l'utilisateur appelant de requérir l'établissement d'une communication avec l'utilisateur appelé,
- et des moyens de gestion capables de lire les informations mémorisés dans les moyens de mémorisation, pour établir une communications entre le terminal de communication de l'utilisateur appelant et un terminal de communication de l'utilisateur appelé, en tenant compte des préférences de l'utilisateur appelant, des préférences de l'utilisateur appelé, et des capacités de leurs terminaux respectifs.

Un tel dispositif ne peut fonctionner que dans le cadre d'un réseau unique puisqu'il centralise les informations correspondant à tous les abonnés entre lesquels les communications doivent être établies. Il ne permet pas de tenir compte des préférences de l'utilisateur appelant et des préférences de l'utilisateur appelé si les deux abonnés appartiennent à deux entreprises ayant respectivement des réseaux de télécommunications privés et distincts.

L'invention a donc pour but de résoudre ce problème, en permettant notamment de tenir compte des préférences de l'utilisateur appelant et des préférences de l'utilisateur appelé lorsque ces utilisateurs appartiennent à des réseaux privés distincts.

Elle propose à cet effet un dispositif de traitement de données, dédié à au moins un utilisateur dit « appelant » et permettant l'établissement de communications entre l'un des terminaux de communication utilisés par cet utilisateur appelant et l'un des terminaux de communication utilisés par au moins un utilisateur dit appelé, ces terminaux étant susceptibles d'être raccordés à des réseaux de communications éventuellement différents. Ce dispositif de traitement de données est caractérisé en ce qu'il comporte :
- des moyens de mémorisation propres à stocker des données d'informations représentatives au moins d'une adresse de communication d'un terminal de communication de l'utilisateur appelant et d'un état d'accessibilité de cet utilisateur appelant via ledit terminal,
- des moyens d'interface agencés pour permettre audit utilisateur appelant de requérir l'établissement d'une communication avec au moins un utilisateur appelé,
- et des moyens de gestion pour :
   -- lire des informations mémorisés dans les moyens de mémorisation,
   -- établir une liaison avec un autre dispositif de traitement de données, analogue, et dédié au moins audit utilisateur appelé,
   -- et transmettre des informations à l'autre dispositif de traitement de données pour négocier avec cet autre dispositif l'établissement de ladite communication entre l'utilisateur appelant et l'utilisateur appelé ; cette négociation consistant notamment à déterminer des terminaux en fonction des informations lues dans les moyens de mémorisation respectifs des dispositifs de traitement de données dédiés respectivement à l'utilisateurs appelant et à l'utilisateur appelé.

Le dispositif selon l'invention pourra comporter de nombreuses caractéristiques complémentaires qui pourront être prises séparément et/ou en combinaison, et en particulier :
- des moyens d'interface pouvant être agencés de manière à permettre à l'utilisateur appelant de requérir l'établissement d'une communication choisie en fonction d'au moins un critère, comme par exemple le niveau d'urgence, le type de la communication, le coût de la communication et/ou la localisation de l'utilisateur appelé. Les moyens de gestion sont alors agencés pour effectuer la négociation en fonction de chaque critère choisi par l'utilisateur appelant ;
- des moyens de mémorisation pouvant stocker des données d'informations représentatives de l'utilisateur appelant. Ainsi, certaines des données d'informations peuvent être représentatives de la position hiérarchique de l'utilisateur appelant au sein d'une structure, ou de son accessibilité par l'un de ses terminaux en fonction du jour et/ou de l'heure. Dans ce dernier cas, elles peuvent être déterminées par les moyens de gestion ;
- des moyens de mémorisation pouvant stocker des données d'informations représentatives d'au moins un utilisateur appelé, comme par exemple son état d'accessibilité par l'un de ses terminaux en fonction du jour et/ou de l'heure ;
- des moyens de gestion pouvant extraire des données d'informations des moyens de mémorisation appartenant au dispositif de traitement de données d'un utilisateur appelé, de sorte qu'elles soient stockées dans ses propres moyens de mémorisation ;
- des moyens de gestion pouvant extraire des données d'informations de bases de données ;
- des moyens d'interface pouvant permettre à l'utilisateur appelant d'effectuer des requêtes vocales, ou par saisie, ou par sélection dans une liste, ou encore par actionnement de touche(s) ;
- des moyens de gestion pouvant être agencés, lorsqu'ils reçoivent une demande d'établissement de communication initiée par un autre dispositif de traitement de données et accompagnée d'un critère choisi impossible à satisfaire, pour déterminer dans les moyens de mémorisation le terminal susceptible d'être accédé par l'utilisateur appelé, puis communiquer à l'autre dispositif de traitement de données les données d'informations représentatives de l'adresse de communication du terminal déterminé. Dans ce cas, lorsqu'ils reçoivent des données d'informations représentatives d'une adresse de communication d'un terminal pouvant être accédé par l'utilisateur appelé mais ne satisfaisant pas au critère, les moyens de gestion sont préférentiellement agencés de manière à adresser à l'utilisateur appelant, via les moyens d'interface, un message lui proposant l'établissement de la communication avec ce terminal d'appelé désigné par l'adresse reçue ;
- des moyens de gestion pouvant être agencés de manière à établir une communication négociée ;
- des moyens de gestion pouvant être agencés de manière à déterminer l'état d'accessibilité de l'utilisateur appelant par ses terminaux associés en fonction de données auxiliaires délivrées par des moyens externes, comme par exemple des données de détection d'activité ou des données de détection de position.

Un tel dispositif de traitement peut par exemple être intégré dans un terminal de communication, tel qu'un téléphone fixe ou mobile, un assistant personnel numérique (PDA), un télécopieur ou un ordinateur fixe ou mobile, ou dans un serveur de communication, tel qu'un serveur téléphonique, ou un serveur de messagerie ou de courrier, ou encore un serveur ayant la fonctionnalité pare-feu ou proxy.

L'invention peut être mise en oeuvre dans les réseaux publics de communications de type PSTN (ou RTC), PLMN (et notamment GSM, GPRS, UMTS, ou i-Mode) et Internet (IP), ainsi que dans les réseaux privés tels que PABX et les passerelles de communication privées (plus connues sous l'expression anglaise « Residential gateway ») pouvant mettre en oeuvre des accès fixes, et sans fil tels que WLAN et Bluetooth.

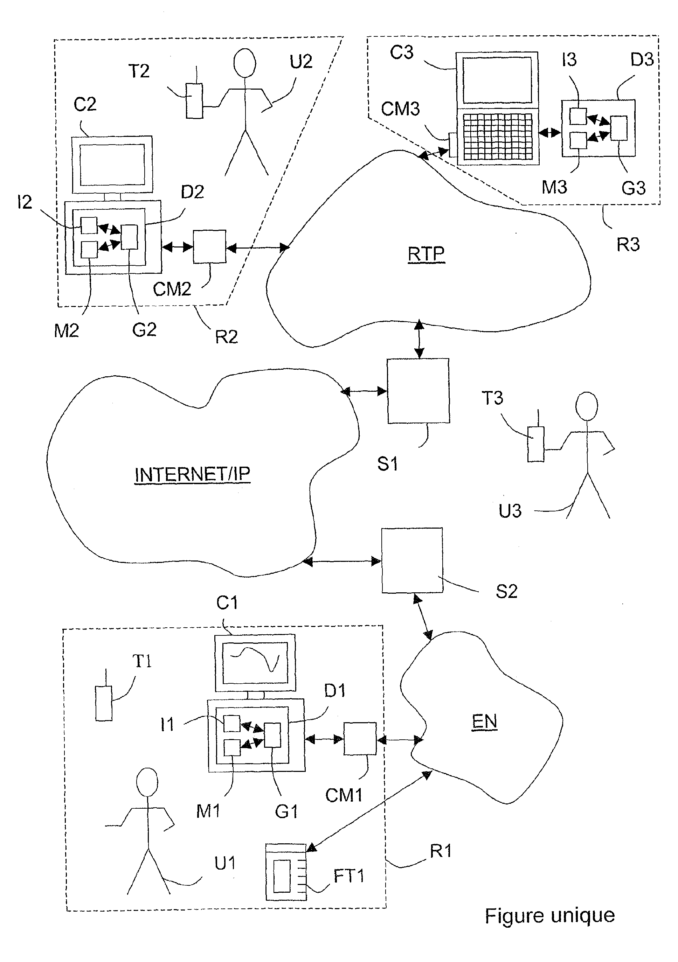

D'autres caractéristiques et avantages de l'invention apparaîtront à l'examen de la description détaillée ci-après, et de l'unique figure annexée qui illustre de façon schématique un exemple d'installation de communications équipée de dispositifs de traitement selon l'invention. Cette figure pourra non seulement servir à compléter l'invention, mais aussi contribuer à sa définition, le cas échéant.

Dans l'exemple illustré sur l'unique figure, on a représenté une installation de communications comportant trois réseaux de communications, de types différents, raccordés entre eux par des serveurs S1 et S2. Plus précisément, dans cet exemple l'installation comporte tout d'abord un premier réseau public de données, par exemple de type Internet/IP, raccordé par un serveur d'accès S1 à un second réseau de téléphonie public RTP, par exemple de type PLMN (pour « Public Land Mobile Network »), tels que les réseaux GSM, GPRS, UMTS et i-Mode. Mais, dans une variante, le second réseau pourrait être un réseau de type commuté (par exemple RTC pour « Réseau Téléphonique Commuté » ou PSTN pour « Public Switched Telephony Network »).

Par ailleurs, on prévoit, ici, un troisième réseau EN, privé, appartenant par exemple à un groupe d'entreprises et couplé au réseau INTERNET/IP par l'intermédiaire d'un routeur IP S2 ayant, de préférence, la fonctionnalité proxy ou pare-feu (« firewall »). Ce réseau privé EN est, par exemple, de type PABX (pour « Private Automatic Branch Exchange »), éventuellement sans fil (s'il utilise la norme DECT). Mais, il pourrait également s'agir d'un réseau de type WLAN (pour « Wireless Local Access Network »).

Une multiplicité de terminaux de communications d'utilisateurs Ui (ici i = 1 à 3) peuvent se raccorder si ils y sont autorisés, soit au réseau privé EN ou au réseau de téléphonie RTP, soit indirectement au réseau Internet/IP via l'un des deux autres réseaux EN et RTP, soit encore indirectement au réseau privé EN via le réseau de téléphonie RTP et le réseau Internet/IP.

Dans l'exemple illustré, chaque utilisateur dispose d'au moins deux terminaux de communications. Un premier utilisateur U1, qui est présent dans son bureau R1, au sein de son entreprise, est équipé d'un téléphone mobile T1, d'un téléphone fixe FT1, raccordé au réseau privé EN, et d'un ordinateur fixe C1, raccordé au réseau privé EN par l'intermédiaire d'un moyen de connexion CM1, ou liaison réseau, de préférence à haut débit, comme par exemple une liaison Ethernet commutée. Mais, tout autre type de liaison réseau peut être envisagé, et notamment les liaisons analogiques, ADSL, 2B+D, 30B+D, radio, WLAN et Bluetooth.

Un deuxième utilisateur U2, qui est présent dans son bureau R2, au sein de son entreprise (ou de son lieu d'habitation), est équipé d'un téléphone mobile T2 et d'un ordinateur fixe C2, raccordé au réseau de téléphonie RTP par l'intermédiaire d'un moyen de connexion CM2, ou liaison réseau, de préférence à haut débit, comme par exemple un modem ADSL. Ce deuxième utilisateur U2 est par exemple un client de l'entreprise pour laquelle travaille le premier utilisateur U1.

Un troisième utilisateur U3, qui est absent de son bureau R3, implanté dans son lieu d'habitation, est équipé d'un téléphone mobile T3 et d'un ordinateur portable C3, raccordé au réseau de téléphonie RTP par l'intermédiaire d'un moyen de connexion CM3, ou liaison réseau, de préférence à haut débit, comme par exemple un modem ADSL. Ce troisième utilisateur U3 est par exemple un prestataire de service de l'entreprise pour laquelle travaille le premier utilisateur U1.

Bien entendu, les liaisons réseaux utilisées par les ordinateurs C2 et C3 des deuxième U2 et troisième U3 utilisateurs peuvent être de tout autre type, comme par exemple des liaisons analogiques, Ethernet commutée, 2B+D, 30B+D, radio, WLAN ou Bluetooth.

Bien entendu, l'invention est ni limitée à cet exemple de combinaison de réseau privé (EN), de réseau public de téléphonie et de réseau public de données (Internet/IP), ni au nombre de réseaux choisi. On pourrait ainsi faire coexister plusieurs réseaux privés, plusieurs réseaux publics de données et plusieurs réseaux publics de téléphonie (par exemple de type PSTN (ou RTC), PLMN (et notamment GSM, GPRS, UMTS ou i-Mode)).

Par ailleurs, l'invention n'est pas limitée aux seuls terminaux de type téléphone mobile et ordinateur fixe ou portable. D'une manière générale, elle concerne tout type de terminal de communication capable d'échanger des données avec un autre terminal, et notamment les téléphones fixes, les assistants personnels numériques (ou PDA pour « Personal Digital Assistant ») et les télécopieurs (ou faxs).

Selon l'invention, chaque utilisateur Ui est associé à un dispositif de traitement de données Di, également appelé « assistant », comprenant une mémoire Mi, une interface de type « homme/machine » li et un module de gestion Gi. Bien entendu, un assistant D peut être associé à plusieurs utilisateurs différents.

Dans l'exemple illustré, l'assistant (ou dispositif) Di est soit directement implanté dans un ordinateur d'utilisateur, comme c'est le cas des premier C1 et deuxième C2 ordinateurs, soit couplé à un ordinateur d'utilisateur, comme c'est le cas du troisième ordinateur C3. Plus précisément, dans le cas de l'ordinateur portable C3 de l'utilisateur U3, l'assistant D3 est réalisé sous la forme d'un boîtier dédié raccordé par voie filaire (ou par voie d'ondes) audit portable C3.

Mais, bien entendu, un ou plusieurs assistants D pourraient être implantés dans un serveur dédié ou dans l'un des serveurs d'accès à l'un des réseaux, comme par exemple dans le routeur IP S2 du réseau privé EN.

La mémoire Mi du dispositif (ou assistant) Di est destinée à stocker des données d'informations représentatives d'une ou plusieurs adresses de communication de terminaux de communication associés à l'utilisateur Ui, et si possible représentatives de chaque adresse de communication de chaque terminal de communication associé à l'utilisateur Ui. Chaque adresse de terminal (numéro de téléphone, adresse électronique (ou « e-mail »), adresse URL, ou analogue) est stockée dans la mémoire Mi en correspondance d'un état qui spécifie à chaque instant si ledit terminal peut être « accédé » par l'utilisateur associé Ui. En d'autres termes, en consultant la mémoire Mi il est possible de savoir à chaque instant quel terminal Ti ou Ci peut être utilisé pour joindre un utilisateur Ui.

Cette mémoire Mi peut également contenir de nombreuses autres données d'informations, comme on le verra plus loin, et notamment des données représentatives de l'utilisateur Ui, comme par exemple les noms des personnes qu'il a l'habitude d'appeler, le type de terminal qu'il préfère généralement utiliser pour échanger des données ou des informations, éventuellement en fonction de leur type, ou encore ses horaires habituels de présence au bureau, et analogues.

L'interface homme-machine li du dispositif (ou assistant) Di est destinée à permettre à un utilisateur dit « appelant » Ui de requérir l'établissement d'une communication avec au moins un utilisateur dit « appelé » Uj, après s'être connecté à son assistant (ou dispositif) Di, par exemple en ayant adressé une commande vocale à l'un de ses terminaux de communication, ou activé une touche dédiée ou sélectionné un menu dédié de l'un de ses terminaux de communication.

La connexion avec l'assistant Di peut s'effectuer soit par une liaison de communication (à une adresse de communication prédéfinie) lorsque l'assistant Di est implanté dans un autre terminal (ou serveur) que celui utilisé par l'utilisateur appelant Ui pour effectuer ses requêtes, soit par un couplage direct lorsque l'assistant Di est implanté dans le terminal utilisé par l'utilisateur appelant Ui pour effectuer ses requêtes. L'adresse de communication de l'assistant Di peut être l'unique adresse connue des autres utilisateurs ou des autres assistants d'utilisateurs et permettant de joindre l'utilisateur associé Ui sur l'un quelconque de ses terminaux de communication.

Une requête peut consister en la fourniture d'un nom d'utilisateur (ou de société) ou d'une adresse de communication, comme par exemple un numéro de téléphone ou une adresse e-mail.

L'interface homme-machine li a donc pour fonction de convertir les requêtes d'établissement de communication, quelle qu'en soit la forme, en données interprétables par le module de gestion Gi qui sera décrit ci-après. Selon le mode de réalisation du terminal de communication, les requêtes peuvent être effectuées oralement, par saisie à l'aide d'un clavier ou d'un stylo électronique, par sélection dans une liste d'un menu, ou par actionnement de touche(s) dédiée(s). Par conséquent, le module de conversion de l'interface li est agencé en fonction du ou des modes d'enregistrement des requêtes au niveau des terminaux de l'utilisateur Ui.

Le module de gestion Gi du dispositif (ou assistant) Di est couplé à l'interface li, qui l'alimente en requêtes d'utilisateur, et à la mémoire Mi. Il est destiné à négocier avec un autre dispositif de traitement de données Dj (et notamment avec son propre module de gestion Gj), dédié à l'utilisateur appelé Uj, l'établissement de la communication requise par l'utilisateur appelant Ui en fonction, au moins, des données d'informations qui sont stockées dans leurs mémoires Mi et Mj respectives. En d'autres termes, lorsqu'un utilisateur appelant Ui requiert de son assistant Di l'établissement d'une communication avec un utilisateur appelé Uj, le module de gestion Gi de son assistant Di établit une liaison avec le module de gestion Gj de l'assistant Dj de l'utilisateur appelé Uj.

Cette liaison est établie via Internet par exemple, mais elle peut être établie aussi bien dans d'autres réseaux susceptibles de transmettre des paquets de données : canal D du RNIS (Réseau numérique à Intégration de Services), réseau X25 , réseau à relayage de trame, etc...

Puis les modules de gestion Gi et Gj déterminent, chacun de leur côté, dans la mémoire Mi ou Mj, le terminal d'appelant (Ti ou Ci) ou d'appelé (Tj ou Cj) susceptible d'être accédé par l'utilisateur appelant Ui ou appelé Uj, compte tenu de son état d'accessibilité.

Cette détermination, pendant la phase de négociation, peut également tenir compte d'un ou plusieurs critère(s) fourni(s) par l'utilisateur appelant Ui, en même temps que sa requête d'établissement de communication, et/ou prédéfini(s) (ou programmé(s)). Parmi les critères possibles on peut notamment citer le niveau (ou degré) d'urgence de la communication, le type de la communication (données de texte, données d'image, données sonores, données multimédia, etc), le coût de la communication et la localisation de l'utilisateur appelé. Le module de gestion Gi des assistants Di d'utilisateurs Ui appartenant à une entreprise peuvent par exemple être configurés de manière à systématiquement donner la priorité à une demande d'établissement de communication issue de l'appelant dont la position hiérarchique au sein de l'entreprise est la plus élevée.

Une fois que chaque module de gestion Gi et Gj a déterminé un terminal, éventuellement en fonction d'un ou plusieurs critères, deux cas peuvent être envisagés. Soit les terminaux déterminés par les assistants Di et Dj des utilisateurs appelant Ui et appelé Uj satisfont à la requête de l'appelant Ui ainsi qu'au(x) éventuel(s critère(s), soit ils n'y satisfont pas.

Si ils y satisfont, les modules de gestion Gi et Gj initient l'établissement de la communication entre les deux terminaux d'appelant et d'appelé qu'ils ont respectivement déterminés, par exemple en s'échangeant des messages de signalisation. Bien entendu, si la liaison ne nécessite pas l'intervention de l'assistant Dj de l'appelé, seul l'assistant Di de l'appelant Ui initie l'établissement de la communication.

Si ils n'y satisfont pas, la négociation se poursuit au niveau du seul module de gestion Gi de l'assistant Di de l'utilisateur appelant Ui. En effet, il peut arriver que l'utilisateur appelant Ui ait requis que son assistant Di joigne un utilisateur appelé Uj sur un terminal Tj (ou Cj) désigné par son adresse de communication, mais que l'assistant Dj dudit utilisateur appelé Uj ait indiqué que l'état d'accessibilité dudit terminal Tj (ou Cj) ne le permettait pas. Il peut également arriver que l'un au moins des terminaux accessibles déterminés ne satisfasse pas à l'un au moins des critères, par exemple pour des raisons de débit ou de coût. Dans ces situations, le module de gestion Gi de l'assistant Di est préférentiellement agencé de manière à signaler à l'utilisateur appelant Ui que l'utilisateur appelé Uj ne peut pas être joint sur son terminal Tj (ou Cj) et/ou que celui-ci ne satisfait pas aux critères demandés, mais qu'il peut malgré tout être joint sur son autre terminal Cj (ou Tj), éventuellement sous réserve qu'une condition soit satisfaite, comme par exemple en cas d'urgence ou en cas d'appel à caractère strictement privé ou strictement professionnel.

Si l'utilisateur appelant Ui accepte la proposition, le module de gestion Gi le signale au module de gestion Gj, et les deux modules de gestion Gi et Gj initient l'établissement de la communication entre les deux terminaux d'appelant et d'appelé qu'ils ont respectivement déterminés, par exemple en s'échangeant des messages de signalisation. Bien entendu, si la liaison ne nécessite pas l'intervention de l'assistant Dj de l'appelé, seul l'assistant Di de l'appelant Ui initie l'établissement de la communication. En revanche, si l'utilisateur appelant Ui refuse la proposition, cela met fin à la tentative de requête d'établissement de communication.

Mais, un module de gestion Gi peut assurer de nombreuses autres fonctions, et notamment :
- analyser des bases de données personnelles (propres à l'utilisateur Ui ou à d'autres utilisateurs Uj moyennant une autorisation) ou communes ;
- analyser une requête d'utilisateur appelant Uj à la demande de son assistant Dj, de manière à la traiter puis à adresser une réponse appropriée audit assistant Dj ;
- traiter des notifications (messages ou demandes de localisation de son utilisateur Ui) ;
- se tenir informé auprès des autres assistants Dj de manière à stocker, de préférence de façon confidentielle (c'est-à-dire non accessible à l'utilisateur Ui), des informations relatives aux utilisateurs Uj associés à ces assistants Dj (comme par exemple les listes de leurs terminaux de communication, leurs habitudes en termes d'utilisation de type de terminal, ou leurs localisations habituelles respectives en fonction du jour et/ou de l'heure, et analogues) ;
- déterminer auprès des autres assistants Dj les coordonnées d'un utilisateur Uj que souhaite joindre son utilisateur Ui et qui lui sont inconnues ;
- signaler aux autres assistants Dj qu'un utilisateur Uj ne répond plus aux adresses de communication qui lui étaient associées, ou qu'un utilisateur Uk ne possède pas d'assistant D ou encore que l'assistant Dj d'un utilisateur Uj est localisé dans son ordinateur Cj (ou dans son téléphone mobile Tj, ou dans un serveur, ou dans tout autre terminal de communication), de manière à permettre une mise à jour automatique des informations de l'ensemble des assistants D ;
- localiser son utilisateur Ui grâce à des données auxiliaires délivrées par des moyens externes, tels que des capteurs de passage et des détecteurs d'activité au niveau d'un ou plusieurs terminaux. Il est en effet possible de récupérer certaines informations de localisation, comme par exemple lors du passage sous un portique (ou dans un portillon) à l'aide d'une carte d'accès, ou grâce à un badge d'identification muni d'une interface Bluetooth, ou lors de l'ouverture ou de la fermeture d'un terminal de communication, etc, afin de déterminer l'état d'accessibilité de l'utilisateur.

D'une manière générale, il est avantageux qu'un assistant Di puisse, grâce à son module de gestion Gi, se comporter comme un « système expert » qui s'enrichit au cours du temps par apprentissage et/ou par acquisition de données d'informations dans son environnement et dans l'environnement des autres assistants avec lesquels il est relation, et/ou par intégration de nouveaux services ou nouvelles fonctionnalités. Un tel comportement peut être mis en oeuvre grâce à des techniques « expert » associées par exemple à des bases de données et des tables sémantiques affectées spécifiquement à chaque assistant D.

Bien entendu, on peut également envisager que les dispositifs de traitement (ou assistants) Di ne soient pas de type adaptatif.

Chaque dispositif de traitement D peut être réalisé sous la forme de circuits électroniques (hardware), de modules logiciels ou informatiques (software), ou d'une combinaison de circuits et de logiciels.

On va maintenant décrire quelques exemples, non exhaustifs, d'utilisation d'assistants D au sein d'une installation du type de celle illustrée sur l'unique figure.

Chacune des situations décrites ci-après est initiée par l'utilisateur U1, qui se trouve dans son bureau R1 et qui travaille avec son ordinateur fixe C1. C'est donc par l'intermédiaire d'un équipement couplé à cet ordinateur fixe C1, par exemple un microphone (ou à l'aide du clavier), que l'utilisateur U1 signale qu'il souhaite accéder à son assistant D1, par exemple en prononçant le mot « assistant » (ou en fournissant l'adresse de communication de l'assistant). Dans le cas présent, l'assistant D1 étant implanté dans l'ordinateur fixe C1, c'est son interface homme-machine l1 qui signale à l'utilisateur, par exemple par un message sonore délivré grâce aux haut-parleurs de l'ordinateur fixe C1 que son assistant D1 est prêt à recevoir une requête.

Dans un premier exemple, l'utilisateur U1 demande à son assistant D1 de joindre l'utilisateur U2 afin de lui transmettre des données de type multimédia, sans que cela ne soit urgent. On suppose, dans cet exemple, que les ordinateurs fixes C1 et C2 des utilisateurs U1 et U2 sont équipés pour l'échange de données multimédia. Cette requête s'effectue par exemple oralement avec la phrase « je veux une communication multimédia avec U2 ».

L'interface homme-machine I1 de l'assistant D1 convertit cette requête en données exploitables par le module de gestion G1, lequel établit alors une liaison avec l'assistant D2 de l'utilisateur U2 désigné. Puis, il lui transmet la requête, par exemple sous la forme [U1, multimédia, priorité normale, seulement si U2 est présent dans son bureau].

A réception de cette requête, le module de gestion G2 de l'assistant D2 interroge la mémoire M2 pour déterminer où se trouve son utilisateur U2 et quel terminal peut accéder à U2. Dans cet exemple, on suppose que l'utilisateur U2 est dans son bureau R2 et qu'il travaille avec son ordinateur fixe C2 (adapté à l'échange de données multimédia).

L'assistant D2 peut alors, par exemple, adresser un message à l'utilisateur U2 (sous forme de texte ou de voix synthétisée) sur son ordinateur fixe C2 pour l'informer de l'appel et lui demander s'il l'accepte ou non.

Dans l'hypothèse où l'utilisateur U2 signifie à son assistant D2 qu'il accepte l'appel, le module de gestion G2 de l'assistant D2 adresse au module de gestion G1 de l'assistant D1 un message par exemple de type [accord, multimédia, ordinateur fixe C2, serveur proxy S1].

Les assistants D1 et D2 s'échangent alors des messages de signalisation de manière à initier l'établissement de la liaison entre les ordinateurs fixes C1 et C2, via le serveur d'accès proxy S1.

Dans un deuxième exemple, l'utilisateur U1 demande également à son assistant D1 de joindre l'utilisateur U2 afin de lui transmettre des données de type multimédia, sans que cela ne soit urgent. On suppose, dans cet exemple, que les ordinateurs fixes C1 et C2 des utilisateurs U1 et U2 sont équipés pour l'échange de données multimédia, mais seul l'ordinateur fixe C1 est en fonctionnement (C2 est éteint).

L'interface homme-machine I1 de l'assistant D1 convertit cette requête en données exploitables par le module de gestion G1, lequel établit alors une liaison avec l'assistant D2 de l'utilisateur U2 désigné. Puis, il lui transmet la requête, par exemple sous la forme [U1, multimédia, priorité normale, seulement si U2 est présent dans son bureau].

A réception de cette requête, le module de gestion G2 de l'assistant D2 interroge la mémoire M2 pour déterminer où se trouve son utilisateur U2 et quel terminal peut accéder à U2. Dans cet exemple, on suppose que l'utilisateur U2 est dans son bureau R2 et, comme indiqué ci-avant, que son ordinateur fixe C2 est éteint. Par conséquent l'utilisateur U2 ne peut être joint que sur son téléphone mobile T2.

L'assistant D2 établit alors une liaison avec le téléphone mobile T2 afin de signaler à son utilisateur U2, par exemple par un message vocal synthétisé, ou un SMS (mais cela pourrait également se faire par l'envoi d'une télécopie), que l'utilisateur U1 souhaite établir avec lui une communication de type multimédia. Dans le même temps, l'assistant D2 signale à l'assistant D1 que l'utilisateur U2 n'est pas encore prêt mais qu'il est informé de la demande d'appel.

L'assistant D1 en informe l'utilisateur U1, par exemple par un message vocal synthétisé ou un message textuel. Puis, dans l'hypothèse où l'utilisateur U1 accepte de mettre en marche son ordinateur fixe C2, le module de gestion G2 de l'assistant D2 adresse au module de gestion G1 de l'assistant D1 un message par exemple de type [accord, multimédia, ordinateur fixe C2, serveur proxy S1].

Les assistants D1 et D2 s'échangent alors des messages de signalisation de manière à initier l'établissement de la liaison entre les ordinateurs fixes C1 et C2, via le serveur d'accès proxy S1.

Dans un troisième exemple, l'utilisateur U1 demande à son assistant D1 de joindre l'utilisateur U3, afin de lui transmettre des données de type multimédia, sans que cela ne soit urgent. On suppose, dans cet exemple, que les ordinateurs fixe C1 et portable C3 des utilisateurs U1 et U3 sont équipés pour l'échange de données multimédia, mais seul l'ordinateur fixe C1 est en fonctionnement (C3 est éteint).

L'interface homme-machine l1 de l'assistant D1 convertit cette requête en données exploitables par le module de gestion G1, lequel établit alors une liaison avec l'assistant D3 de l'utilisateur U3 désigné. Puis, il lui transmet la requête, par exemple sous la forme [U1, multimédia, priorité normale, seulement si U3 est présent dans son bureau].

A réception de cette requête, le module de gestion G3 de l'assistant D3 interroge la mémoire M3 pour déterminer où se trouve son utilisateur U3 et quel terminal peut accéder à U3. Dans cet exemple, on suppose que l'utilisateur U3 est en déplacement et qu'il ne peut être joint que sur son téléphone mobile T3 sous réserve que l'appel soit urgent et à caractère professionnel.

L'assistant D3 transmet alors à l'assistant D1 les coordonnées téléphoniques (06 XX XX XX XX) du téléphone mobile T3 en spécifiant que l'utilisateur U3 peut être joint sur celui-ci sous réserve que l'appel soit urgent et à caractère professionnel.

L'assistant D1 en informe immédiatement l'utilisateur U1, par exemple par un message vocal synthétisé ou un message textuel. Puis, si l'utilisateur U1 indique à son assistant D1 que l'appel est réellement urgent et à caractère professionnel, le module de gestion G1 indique à l'utilisateur U1 qu'il tente d'établir une liaison entre son téléphone fixe FT1 et le téléphone mobile T3 de l'utilisateur U3. Bien entendu, on pourrait envisager que le module de gestion G1 propose à l'utilisateur U1 d'utiliser un autre de ses terminaux de communication, comme par exemple son téléphone mobile T1. Ici, le téléphone fixe FT1 est proposé à l'utilisateur U1 car il s'agit du terminal de communication qu'il préfère utiliser lorsqu'il est présent dans son bureau, notamment dans le cadre d'appels à caractère professionnel.

L'assistant D1 initie alors l'établissement de la liaison entre les téléphones fixe FT1 et mobile T3, de préférence sans que le numéro de téléphone de T3 ne s'affiche sur l'écran de FT1.

Dans les exemples décrits ci-avant, il a toujours été question d'une requête initié par un utilisateur Ui à l'aide d'un terminal de communication Ci dans lequel était implanté son assistant Di. Mais, il est également possible d'initier une requête à l'aide d'un terminal Ti distant du terminal ou serveur dans lequel est implanté l'assistant Di. Dans ce cas, il suffit en effet d'établir une liaison entre le terminal initiateur Ti et le terminal ou serveur équipé de l'assistant Di.

L'invention peut être également considérée en tant que procédé de traitement de données destiné à permettre l'établissement de communications entre l'un des terminaux de communication (Ti,Ci,FTi) utilisés par un utilisateur appelant Ui et l'un des terminaux de communication (Tj,Cj,FTj) utilisés par au moins un utilisateur appelé Uj, ces terminaux étant susceptibles d'être raccordés à des réseaux de communications éventuellement différents.

Celui-ci peut être mis en oeuvre à l'aide de dispositifs de traitement D présentés ci-avant. Les fonctions et sous-fonctions principales et optionnelles assurées par les étapes de ce procédé étant sensiblement identiques à celles assurées par les différents moyens constituant les dispositifs de traitement D, seules seront résumées ci-après les étapes mettant en oeuvre les fonctions principales du procédé selon l'invention.

Ce procédé de traitement consiste à :
- stocker i) des premières données d'informations représentatives d'une ou plusieurs adresses de communication de terminaux de communication (Ti,Ci,FTi) de l'utilisateur appelant Ui et d'un état d'accessibilité de cet utilisateur appelant Ui par chaque terminal, et ii) des secondes données d'informations représentatives au moins d'une ou plusieurs adresses de communication de terminaux de communication (Tj,Cj,FTj) de l'utilisateur appelé Uj et d'un état d'accessibilité de cet utilisateur appelé Uj par chaque terminal,
- requérir l'établissement d'une communication entre l'utilisateur appelant Ui et l'utilisateur appelé Uj, et
- négocier, en fonction au moins des premières et secondes données d'informations stockées, l'établissement de la communication requise entre deux terminaux pouvant être respectivement accédés par les utilisateurs appelant Ui et appelé Uj.

L'invention ne se limite pas aux modes de réalisation de dispositif de traitement D et de terminal ou serveur de communication décrits ci-avant, seulement à titre d'exemple, mais elle englobe toutes les variantes que pourra envisager l'homme de l'art dans le cadre des revendications ci-après.

Ainsi, dans ce qui précède il a été fait référence à une installation de communications comportant un réseau privé appartenant à une entreprise ou à un groupe d'entreprises et couplé à un réseau de type Internet/IP, lui même couplé à un réseau de téléphonie. Mais, l'invention concerne d'une manière générale tous les types de réseau public ou privé interconnectés entre eux.

Par ailleurs, on a décrit une application dans laquelle les terminaux étaient des ordinateurs fixes ou portables et des téléphones fixes ou mobiles. Mais, l'invention concerne d'une manière générale toutes les machines fixes ou portables capables d'échanger des données (de type multimédia, voie, image ou texte) avec un réseau de communications (quel qu'en soit le type), y compris les télécopieurs et les assistants personnels numériques (ou PDA).

En outre, on a décrit une installation dans laquelle chaque utilisateur était associé à un dispositif de traitement (ou assistant) implanté dans (ou raccordé à) l'un de ses terminaux de communication. Mais, l'invention s'applique également au cas où plusieurs dispositifs de traitement sont implantés dans un équipement de réseau comme par exemple un serveur, ou une machine dédiée, ou encore un boîtier dédié raccordable à un serveur. De même, l'invention s'applique également au cas ou un dispositif de traitement est partagé par plusieurs utilisateurs.

Enfin, on a décrit des exemples dans lesquels un utilisateur appelant tentait de joindre un unique utilisateur appelé. Mais, l'invention s'applique également aux situations dans lesquelles un utilisateur appelant tentait de joindre plusieurs utilisateurs appelés. Dans ce cas, la négociation s'effectue entre les différents dispositifs de traitement des utilisateurs concernés.

## Revendications

1. Dispositif de traitement de données (Di) dédié à au moins un utilisateur (Ui), pour l'établissement de communications entre au moins un terminal de communication (Ci,Ti,FTi) d'un utilisateur dit appelant (Ui) et au moins un terminal de communication (Cj,Tj,FTj) d'au moins un utilisateur dit appelé (Uj), chacun desdits terminaux étant raccordé à un réseau de communications ; **caractérisé en ce qu'**il comporte :
- des moyens de mémorisation (Mi) propres à stocker des données d'informations représentatives au moins d'une adresse de communication d'un terminal de communication (Ci,Ti,FTi) de l'utilisateur appelant (Ui) et d'un état d'accessibilité de cet utilisateur appelant (Ui) via ledit terminal (Ci,Ti,FTi),
- des moyens d'interface (li) agencés pour permettre audit utilisateur appelant (Ui) de requérir l'établissement d'une communication avec au moins un utilisateur appelé (Uj),
- et des moyens de gestion (Gi) pour :
-- lire les informations mémorisés dans les moyens de mémorisation (Mi),
-- établir une liaison avec un autre dispositif de traitement de données (Dj), analogue et dédié au moins audit utilisateur appelé (Uj),
-- et transmettre des informations à l'autre dispositif de traitement de données (Dj) pour négocier avec cet autre dispositif (Dj) l'établissement de ladite communication entre l'utilisateur appelant (Ui) et l'utilisateur appelé (Uj) ; cette négociation consistant notamment à déterminer des terminaux en fonction des informations lues dans les moyens de mémorisation respectifs des dispositifs de traitement de données (Di, Dj) dédiés respectivement à l'utilisateurs appelant et à l'utilisateur appelé.

2. Dispositif selon la revendication 1, **caractérisé en ce que** lesdits moyens d'interface (li) sont agencés pour permettre audit utilisateur appelant (Ui) de requérir l'établissement d'une communication choisie en fonction d'au moins un critère, et **en ce que** lesdits moyens de gestion (Gi) sont agencés pour effectuer ladite négociation en fonction dudit critère.

3. Dispositif selon la revendication 2, **caractérisé en ce que** ledit critère est choisi dans un groupe comprenant au moins le niveau d'urgence, le type de la communication, le coût de la communication et/ou la localisation du utilisateur appelé (Uj).

4. Dispositif selon la revendication 1, **caractérisé en ce que** lesdits moyens de mémorisation (Mi) sont propres à stocker des données d'informations représentatives dudit utilisateur appelant (Ui).

5. Dispositif selon la revendication 4, **caractérisé en ce que** certaines desdites données d'informations sont représentatives de la position hiérarchique dudit utilisateur appelant (Ui) au sein d'une structure.

6. Dispositif selon la revendication 4, **caractérisé en ce que** certaines desdites données d'informations sont représentatives de l'état d'accessibilité dudit utilisateur appelant (Ui) par un terminal (Ci,Ti,FTi) en fonction du jour et/ou de l'heure.

7. Dispositif selon la revendication 6, **caractérisé en ce que** lesdits moyens de gestion (Gi) sont agencés pour déterminer lesdites données d'informations représentatives de l'état d'accessibilité dudit utilisateur appelant (Ui) par un terminal (Ci,Ti,FTi) en fonction du jour et/ou de l'heure.

8. Dispositif selon la revendication 1, **caractérisé en ce que** lesdits moyens de mémorisation (Mi) sont propres à stocker des données d'informations représentatives d'au moins un utilisateur appelé (Uj).

9. Dispositif selon la revendication 8, **caractérisé en ce que** certaines desdites données d'informations sont représentatives de l'état d'accessibilité dudit utilisateur appelé (Uj) par un terminal (Cj,Tj,FTj) en fonction du jour et/ou de l'heure.

10. Dispositif selon la revendication 1, **caractérisé en ce que** lesdits moyens de gestion (Gi,Gj) sont agencés pour extraire des données d'informations de moyens de mémorisation (Mj) appartenant au dispositif de traitement de données (Dj) d'un utilisateur appelé (Uj), de sorte qu'elles soient stockées dans lesdits moyens de mémorisation (Mi).

11. Dispositif selon la revendication 1, **caractérisé en ce que** lesdits moyens de gestion (Gi,Gj) sont agencés pour extraire des données d'informations de bases de données.

12. Dispositif selon la revendication 1, **caractérisé en ce que** lesdits moyens d'interface (li) sont agencés pour permettre audit utilisateur appelant (Ui) d'effectuer des requêtes choisies dans un groupe comprenant les requêtes vocales, les requêtes par saisie, les requêtes par sélection dans une liste et/ou les requêtes par actionnement de touche(s).

13. Dispositif selon la revendication 2, **caractérisé en ce qu'**à réception d'une demande d'établissement de communication initiée par un autre dispositif de traitement de données (Dj) et accompagnée d'un critère choisi impossible à satisfaire, lesdits moyens de gestion (Gi) sont agencés pour déterminer dans lesdits moyens de mémorisation (Mi) le terminal (Ci,Ti,FTi) pouvant être accédé par ledit utilisateur appelé (Ui), puis communiquer audit autre dispositif de traitement de données (Uj) les données d'informations représentatives de son adresse de communication.

14. Dispositif selon la revendication 13, **caractérisé en ce qu'**à réception desdites données d'informations représentatives d'une adresse de communication d'un terminal (Ci,Ti,FTi) pouvant être accédé par ledit utilisateur appelé (Ui) mais ne satisfaisant pas audit critère, lesdits moyens de gestion (Gj) sont agencés pour adresser audit utilisateur appelant (Uj), via lesdits moyens d'interface (Ij), un message lui proposant l'établissement de la communication avec ledit terminal pouvant être accédé par ledit utilisateur appelé.

15. Dispositif selon la revendication 1, **caractérisé en ce que** lesdits moyens de gestion (Gi) sont agencés pour déterminer l'état d'accessibilité dudit utilisateur appelant (Ui) par l'un des terminaux (Ci,Ti,FTi) associés en fonction de données auxiliaires délivrées par des moyens externes.

16. Dispositif selon la revendication 15, **caractérisé en ce que** lesdites données auxiliaires sont choisies dans un groupe comprenant au moins les données de détection d'activité et les données de détection de position.

17. Terminal de communication (Ci,Ti,FTi) d'un réseau de communications, **caractérisé en ce qu'**il comprend un dispositif de traitement de données (Di) selon l'une des revendications 1 à 16.

18. Serveur de communication (S) d'un réseau de communications, **caractérisé en ce qu'**il comprend un dispositif de traitement de données (Di) selon l'une des revendications 1 à 16.
